# FASCICULE DE BREVET EUROPEEN

(11) **EP 2 466 849 B1**
(45) Date de publication et mention de la délivrance du brevet: **09.11.2016**
(21) Numéro de dépôt: 11194389.0
(22) Date de dépôt: 19.12.2011
(51) Int. Cl.: H04L 29/06, H04L 12/18

(54) **Distribution selective d'un flux multicast**
Selektive Verteilung eines Multicast-Flusses
Selective distribution of a multicast stream

(30) Priorité: 20.12.2010 FR 1060848
(43) Date de publication de la demande: 20.06.2012
(73) Titulaire: Orange, 75015 Paris (FR)
(72) Inventeur: Vivolo, Olivier, 35000 RENNES (FR); Fontaine, Noël, 35590 SAINT-GILLES (FR)
(74) Mandataire: Cabinet Plasseraud

(56) Documents cités:
- EP-A2- 1 176 490
- EP-A2- 1 610 200
- US-A1- 2003 217 163

## Description

La présente invention concerne la distribution sélective de flux de données à destination d'utilisateurs d'un réseau de distribution de contenus.

Il est possible de distribuer de façon sélective un contenu protégé après un contrôle effectué par un élément du réseau (routeur, DSLAM (« *Digital Subscriber Line Access Multiplexer »),* etc.) Le contrôle est effectué en préalable à la distribution du contenu par l'élément placé dans le réseau.

Par exemple, le contrôle porte sur l'adéquation entre les conditions d'accès présentes dans le flux et les droits de l'utilisateur stockés dans une table de l'élément du réseau.

L'envoi du flux est conditionné par l'adéquation d'informations extraites du signal par l'équipement réseau et les droits utilisateur stockés dans la mémoire de l'équipement.

Il est alors nécessaire d'avoir une capacité de stockage dans l'équipement du réseau lui permettant de mémoriser les informations relatives aux droits des terminaux connectés.

En outre, les traitements peuvent s'avérer complexes dans le cas du stockage local des autorisations. En effet, avant de procéder à la distribution du contenu, l'équipement du réseau doit être capable d'extraire les éléments pertinents du signal reçu afin de réaliser la comparaison avec les autorisations présentes.

Selon un autre exemple, le contrôle est effectué par un élément du réseau et porte sur un ticket obtenu auprès d'un serveur gérant l'accès au service. Dans ce cas, l'élément du réseau et le serveur délivrant le ticket partagent une même base de données.

Il est alors nécessaire d'établir un lien (ou le partage de données) entre le système d'informations (SI) commercial de l'opérateur gérant le service et les éléments du réseau en charge d'effectuer le contrôle des données commerciales associées aux contenus protégés (appartenance à une offre ou identifiant de l'offre, validité d'un ticket dans une base de données, etc.).

En outre, ce mode opératoire crée un lien fort entre le SI commercial de l'opérateur du service et le réseau en charge de la distribution du contenu, alors qu'il est souvent plus recherché de séparer le réseau et les services.

Dans les deux exemples précédents où l'opérateur de service n'est pas l'opérateur du réseau, le mécanisme proposé impose un partage d'informations et aussi la mise en place de passerelles entre les opérateurs.

Selon un autre exemple encore, le contrôle de l'accès intemet et des autorisations de service est effectué par le biais d'une requête transmise par le DSLAM (« *Digital Subscriber Line Access Multiplexer*») en direction d'un serveur fonctionnant selon le protocole RADIUS *(« Remote Authentication Dial-In User Service*»)*.*

Dans cet exemple, il est nécessaire que l'autorisation soit effectuée par un serveur tiers (contrôle déporté).

En outre, le contrôle nécessite l'adjonction d'un équipement externe (le serveur RADIUS).

Dans tous les cas, que l'opérateur du service soit ou non l'opérateur du réseau, il faut créer des passerelles complexes et coûteuses (parce que inexistantes le plus souvent) entre les frontaux commerciaux et les équipements intervenant dans la distribution finale du contenu (DSLAM par exemple).

Le document EP 1 176 490 décrit un système de distribution de contenus encryptés à un dispositif récepteur. Le système comprend un dispositif cessionnaire de droits ainsi qu'un distributeur de contenu.

Le document US 2003/0217163 concerne un procédé d'accès conditionnel permettant d'attribuer un droit d'accès à un terminal utilisateur, dans lequel une chaîne de données est générée par un module de génération d'un serveur d'accès, cette chaîne comprenant des données de droit d'accès.

Le document EP 1 610 200 décrit un procédé de téléchargement depuis un serveur dans un réseau de communication mobile. En particulier, le procédé concerne le téléchargement de contenus multimédia depuis un serveur vers un équipement d'utilisateur et elle permet la protection du droit d'auteur associé au contenu multimédia en empêchant le téléchargement sans accord préalable.

L'invention propose des améliorations aux solutions existantes.
A cet effet, selon un premier aspect de l'invention, il est proposé un procédé d'accès à un flux de données de contenu par un terminal de télécommunications dans un réseau télécommunications, comportant les étapes suivantes mises en oeuvre par le terminal:
- envoi d'une première requête à destination d'une entité de gestion d'accès à un service, cette première requête visant à identifier le terminal auprès de l'entité de gestion d'accès au service,
- après identification du terminal par l'entité de gestion d'accès à au service, réception de moyens d'authentification fournis par l'entité de gestion d'accès à au service,
- envoi d'une deuxième requête à destination d'une entité d'accès , cette deuxième requête visant l'accès par le terminal au flux de données de contenu, et cette deuxième requête étant générée en utilisant les moyens d'authentification fournis par l'entité de gestion d'accès au service, et
- réception en provenance de l'entité d'accès d'un flux de données de contenu, suite à une authentification positive du terminal auprès de l'entité d'accès.

On peut ainsi réaliser la distribution sélective d'un flux, notamment d'un flux multicast, à des usagers dûment autorisés et identifiés sans qu'il soit nécessaire d'établir un lien régulier entre les équipements du réseau (DSLAM) de l'opérateur du réseau et le système d'informations commercial (abonnements) de l'opérateur du service.

Ainsi, on réduit l'impact du contrôle effectué par l'équipement du réseau à la vérification d'une signature lors de la requête d'accès au flux effectuée par le terminal.

Par ailleurs, le lien entre le SI commercial de l'opérateur du service et les équipements du réseau (voire avec un équipement externe) n'est plus nécessaire. Le contrôle peut être du type « stand alone ».

Il est également possible de limiter la configuration des équipements du réseau en charge d'effectuer ce contrôle, à l'insertion d'une clé locale en préalable à l'ouverture du service.

Ainsi, le traitement réalisé par ces équipements peut se limiter à la vérification d'une signature des paramètres transmis dans la requête du terminal demandeur.

D'une manière générale on peut distribuer sélectivement un flux en maintenant une séparation service/réseau.

Des modes de réalisation peuvent facilement s'insérer dans une architecture mono opérateur mais aussi, multi opérateurs.

On offre également un complément à la sécurité de l'accès à un flux. Les contenus peuvent n'être distribués qu'aux usagers dûment identifiés comme étant clients du service.

Des modes de réalisation peuvent s'appliquer aux distributions sélectives de contenus (IPTV), notamment sur réseau fibre (FTTH) ou cuivre (ADSL).

Des modes de réalisation permettent d'offrir une nouvelle fonctionnalité dans un réseau déjà existant sans impacter lourdement la distribution de flux sélective.

Des modes de réalisation peuvent comporter l'une ou plusieurs des mesures suivantes.

L'entité de gestion d'accès au service détermine un ou plusieurs droits d'accès du terminal à un ou plusieurs flux de données.

La première requête et/ou la deuxième requête comporte au moins l'un d'un identifiant du terminal et d'une adresse réseau du terminal.

Les moyens d'authentification comportent une première clé cryptographique, par exemple pour signer la deuxième requête.

L'entité d'accès obtient la première clé cryptographique et authentifie la deuxième requête en vérifiant la signature de la deuxième requête au moyen de la première clé cryptographique

La première clé cryptographique est obtenue dynamiquement à partir d'au moins l'un d'un identifiant du terminal et d'une adresse réseau du terminal.

Les moyens d'authentification comportent un certificat d'authentification autorisant l'accès par le terminal au flux de données.

Le certificat comporte en outre une durée de validité du certificat.

Le certificat comporte au moins un identifiant que l'entité d'accès peut vérifier (par exemple l'identifiant de ligne téléphonique, le numéro de port sur lequel la ligne téléphonique est raccordée à l'entité d'accès, ...).

La deuxième requête comporte le certificat.

L'entité d'accès vérifie le certificat au moyen d'une deuxième clé d'autorité de certification.

La deuxième requête est signée par le terminal au moyen d'une troisième clé cryptographique.

L'entité d'accès authentifie la deuxième requête en vérifiant la signature de la deuxième requête au moyen de la troisième clé cryptographique.

Selon d'autres aspects de l'invention, il est prévu :
- un programme d'ordinateur comportant des instructions pour la mise en oeuvre d'un procédé selon le premier aspect de l'invention lorsque le programme est exécuté par un processeur :
- un support lisible par un ordinateur sur lequel est enregistré un tel programme d'ordinateur ;
- un terminal de télécommunications pour la mise en oeuvre d'un procédé selon le premier aspect de l'invention.

Un tel terminal comporte :
- une unité de communication configurée pour envoyer une première requête à destination d'une entité de gestion d'accès à un service, cette première requête visant à identifier le terminal auprès de l'entité de gestion d'accès à un service, pour recevoir des moyens d'authentification fournis par l'entité de gestion d'accès au service après identification du terminal par l'entité de gestion d'accès à un service, pour envoyer une deuxième requête à destination d'une entité d'accès, cette deuxième requête visant l'accès par le terminal au flux de données de contenu, et pour recevoir en provenance de l'entité d'accès d'un flux de données de contenu, suite à une authentification positive du terminal auprès de l'entité d'accès, et
- une unité de traitement configurée pour générer la deuxième requête en utilisant les moyens d'authentification fournis par l'entité de gestion d'accès au service.

Les avantages procurés par le programme d'ordinateur, le support lisible par ordinateur, et le terminal, tels que succinctement exposés ci-dessus, sont au moins identiques à ceux mentionnés plus haut en liaison avec le procédé selon le premier aspect.

D'autres caractéristiques et avantages de l'invention apparaîtront encore à la lecture de la description qui va suivre. Celle-ci est purement illustrative et doit être lue en regard des dessins annexés sur lesquels:
- la figure 1 illustre un système général de mise en oeuvre de modes de réalisation de l'invention;
- la figure 2 est un organigramme général représentant des étapes mises en oeuvre selon un premier mode de réalisation:
- la figure 3 est un organigramme général représentant des étapes mises en oeuvre selon un deuxième mode de réalisation ;
- la figure 4 est un organigramme général représentant des étapes mises en oeuvre selon un troisième mode de réalisation ; et
- la figure 5 illustre schématiquement la structure d'éléments compris dans un système de ces modes de réalisation de l'invention.

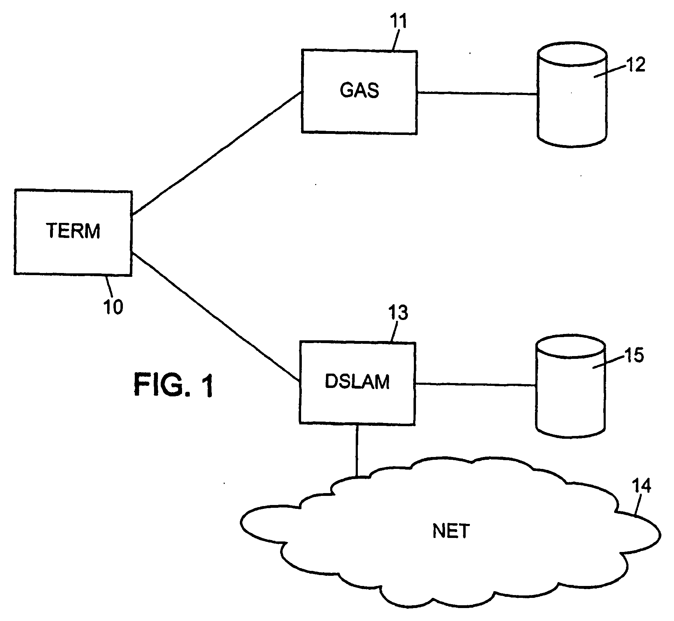

La figure 1 illustre un système général de mise en oeuvre de différents modes de réalisation de l'invention, selon un exemple particulier de réalisation. Ce système comprend:
- une entité GAS de gestion d'accès à un service 11 gérant ici l'accès de terminaux 10 à un service TV de transmission de programmes audiovisuels, fourni par un opérateur et éventuellement organisé en bouquets de chaînes TV,
- une base de données utilisateurs 12, connectée à l'entité GAS 11 de gestion d'accès au service et stockant des informations relatives à des utilisateurs du service TV fournies par l'opérateur de service, ces informations comprenant notamment des droits d'abonnement d'utilisateurs à des programmes audiovisuels éventuellement organisés en bouquets de chaînes TV,
- une entité d'accès à des flux de données de programmes audiovisuels, en l'espèce un DSLAM 13.
- une base de données 15 connectée à l'entité d'accès 13, et
- un terminal d'utilisateur 10, par exemple une « set top box », autrement dit un récepteur décodeur TV.

Bien entendu, l'entité de gestion de service 11 pourrait fournir un service autre que la transmission de programmes TV.

La base de données 15 contient un ensemble de couples comprenant, chacun, une clé cryptographique Ki et un ensemble comprenant un ou plusieurs flux de données de programme audiovisuel. Ces couples sont fournis par l'opérateur gérant le service TV.

Les programmes TV sont transmis sous la forme de flux de données à travers un réseau 14. L'entité d'accès 13, l'entité de gestion d'accès au service 11 et le terminal 10 sont connectés au réseau 14.

Le procédé d'accès par le terminal à un flux de données d'un programme audiovisuel transmis via le réseau va maintenant être décrit d'une manière générale.

Le terminal 10 envoie une requête vers l'entité de gestion d'accès au service 11, pour accéder au flux de données. L'entité GAS 11 de gestion d'accès au service se charge de déterminer si le terminal 10 a les droits d'accès nécessaires pour accéder au flux. Par exemple, elle vérifie les droits d'abonnement du terminal. A cet effet, l'entité GAS 11 peut consulter la base de données 12 comportant les informations dont elle a besoin. On fait ici l'hypothèse que le terminal 10 a les droits suffisants pour accéder au flux demandé.

Lorsque l'entité de gestion d'accès au service 11 a vérifié que le terminal 10 peut accéder au flux, elle lui fournit des moyens d'authentification destinés à être utilisés par la suite pour accéder au flux souhaité.

Après réception des moyens d'authentification, le terminal 10 accède au réseau 14 via l'entité d'accès, par exemple un DSLAM 13, en utilisant les moyens d'authentification qui lui ont été fournis par l'entité 11 de gestion d'accès au service.

Le DSLAM 13 authentifie le terminal 10 et autorise ou non l'accès au flux demandé, selon que l'authentification est valide ou invalide. Pour authentifier le terminal 10, le DSLAM 13 peut consulter une base de données 15 comportant les informations dont il a besoin.

En cas d'authentification valide, le DSLAM 13 transmet le flux de données demandé au terminal 10.

Dans la suite, on décrit trois modes distincts de réalisation particuliers du procédé d'accès à un flux de données par le terminal 10, selon l'invention.

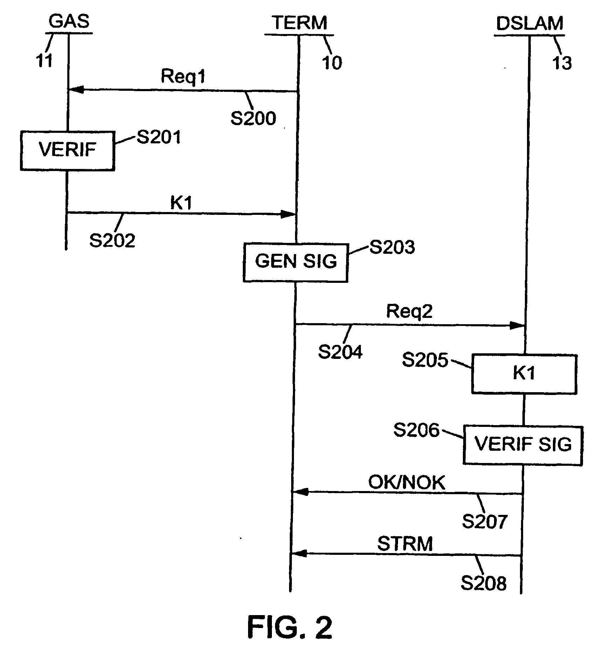

Le premier mode de réalisation est décrit en référence à la figure 2.

Le terminal 10 envoie une requête Req1 vers l'entité 11 de gestion d'accès au service (GAS) 11 lors de l'étape S200. Cette requête Req1 lui permet de s'identifier auprès de l'entité de gestion d'accès au service 11 et, comme on le voit dans la suite, d'obtenir des moyens d'authentification pour recevoir le flux transmis par le réseau 14. La requête Req1 comporte des informations d'identification du terminal 10 (et/ou de l'utilisateur), par exemple un identifiant du terminal (ou de l'utilisateur), et une adresse IP du terminal.

L'entité 11 de gestion d'accès au service (GAS) reçoit la requête Req1. Elle détermine ensuite lors de l'étape S201, l'identité de l'utilisateur soit à partir de l'identifiant du terminal soit à partir de l'adresse IP du terminal.

Lors de cette même étape S201, l'entité de gestion d'accès au service 11 détermine à partir de l'identité de l'utilisateur les droits de l'utilisateur sur les différents flux disponibles sur le réseau. Par exemple, l'entité de gestion d'accès au service 11 consulte une table, stockée dans la base de données 12, de correspondance entre des informations d'identification d'utilisateur et/ou de terminal et un ensemble d'identifiants de flux{Flux.Id} autorisés auquel ce terminal 10 peut accéder.

L'entité de gestion d'accès au service 11 récupère alors une (ou plusieurs) clé cryptographique K1 auprès de la base de données 15 pour l'ensemble des flux {Flux.Id} autorisés pour l'utilisateur et la (ou les) transmet à l'utilisateur lors de l'étape S202.

Lorsque l'utilisateur souhaite accéder à une chaîne particulière, autrement dit à un flux de données audio/vidéo particulier, le terminal 10 émet, lors de l'étape S204, une requête Req2 au DSLAM 13 pour obtenir le flux audio/vidéo souhaité. La requête Req2 est signée par la clé K1 qui est associée au flux demandé. La signature de la requête Req2 est réalisée lors de l'étape S203. La requête Req2 comporte par exemple l'adresse IP du terminal, l'adresse IP du flux demandé, et la signature de la requête.

Le DSLAM 13 est configuré par l'opérateur du réseau 14 avec les clés associées aux flux. Il utilise la clé K1 en fonction de l'adresse IP du flux demandé (Flux IP). Par exemple, le DSLAM 13 obtient la clé dans la base de données 15 (qui peut être en fait la même base de données 12), lors de l'étape S205. Le DSLAM vérifie la signature de la requête Req2 à l'aide de cette clé lors de l'étape S206.

Selon certaines alternatives, la clé à utiliser pour générer la signature de la requête Req2 est une clé obtenue dynamiquement à partir de l'adresse IP du terminal. Selon d'autres alternatives, elle est obtenue à partir d'un identifiant du terminal et de la clé K1. Dans ce cas, du terminal 10 et le DSLAM 13 réalisent séparément une même opération de calcul afin de déterminer la clé à utiliser.

Lorsque les vérifications sont effectuées, le DSLAM envoie une réponse au terminal 10 lors l'étape S207. Cette réponse peut comporter une indication d'acceptation de l'accès au flux, ou d'un refus d'accès au flux, selon que les vérifications effectuées ont réussi ou échoué.

Lorsque les vérifications ont réussi, le flux est transmis par le DSALM 13 au terminal 10 lors de l'étape S208.

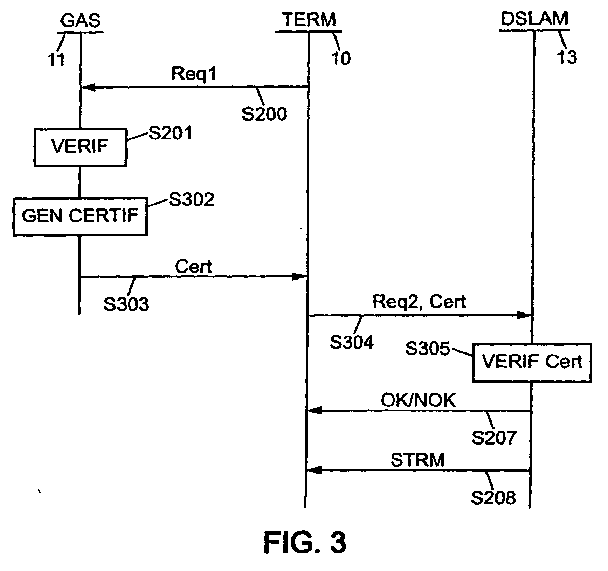

Un deuxième mode de réalisation particulier est décrit en référence à la figure 3.

Comme dans le premier mode de réalisation, une requête d'authentification Req1 permettant de s'identifier auprès de l'entité GAS de gestion d'accès au service 11 est envoyée par le terminal 10 vers l'entité de gestion d'accès au service 11 lors de l'étape S200, et l'entité de gestion d'accès au service 11 effectue des vérifications lors de l'étape S201.

Dans ce deuxième mode de réalisation particulier, à la place d'une clé cryptographique, l'entité de gestion d'accès au service 11 génère un certificat électronique d'authentification Cert lors d'une étape S302, et transmet ce certificat lors de l'étape S303 au terminal 10.

Par exemple, le certificat électronique d'authentification Cert contient les droits de l'utilisateur sur un ensemble de flux identifiés par un identifiant de flux « flux.ID » ou par une adresse IP de flux « Flux.IP » ou bien les deux) et une durée de validité. Le certificat électronique Cert est signé par l'entité de gestion d'accès au service 11.

Lorsque l'utilisateur du terminal 10 souhaite regarder une chaîne particulière, autrement dit accéder à un flux de données particulier, le terminal 10 émet, lors de l'étape S304, la requête Req2 vers le DSLAM 13 pour obtenir le flux audio/vidéo. Dans ce mode de réalisation, la requête Req2 est une requête non signée mais le terminal 10 y insère le certificat obtenu auprès de l'entité GAS de gestion d'accès au service 11.

Le DSLAM 13 vérifie, lors de l'étape S305, le certificat Cert et sa validité et vérifie que le flux demandé (soit avec Flux.ID soit avec Flux.IP) fait bien partie des flux autorisés dans le certificat Cert.

L'entité GAS de gestion d'accès au service 11 peut ajouter dans le certificat Cert soit un identifiant de la ligne téléphonique soit un numéro de port sur lequel la ligne téléphonique est raccordée au DSLAM. Cela permet en plus au DSLAM de contrôler de façon "physique' la provenance de la requête Req2.

Ensuite, le processus se poursuit avec les étapes S207 et S208 évoquées ci-avant pour le premier mode de réalisation.

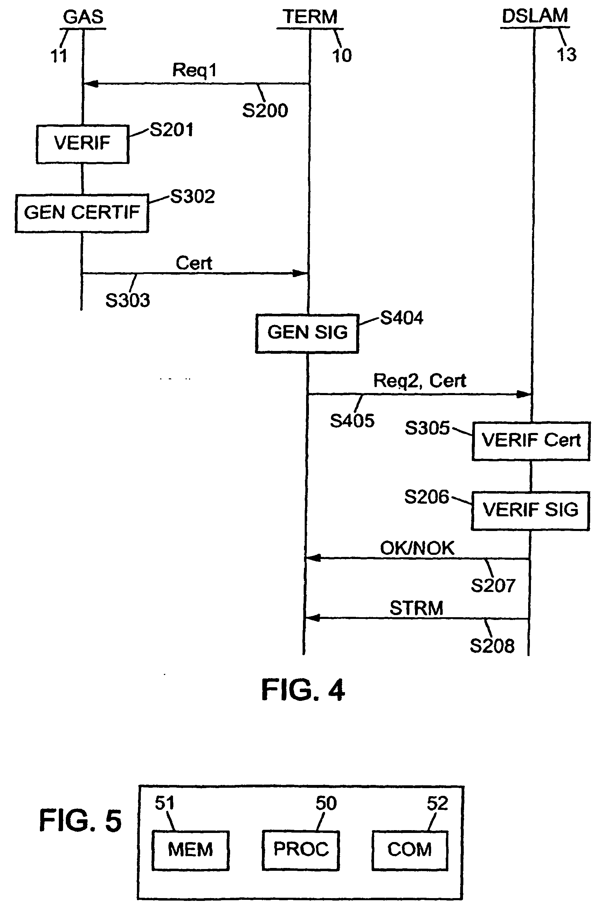

Un troisième mode de réalisation particulier est décrit en référence à la figure 4. Comme dans le premier mode de réalisation, la requête Req1 est envoyée par le terminal 10 vers l'entité GAS de gestion d'accès au service 11 lors de l'étape S200, et l'entité GAS de gestion d'accès au service 11 effectue des vérifications lors de l'étape S201.

Ensuite, l'entité de gestion d'accès au service 11 récupère une clé publique associée au terminal soit en interrogeant la base de données 12, soit par extraction de la requête Req1 dans le cas où le terminal a inséré la clé publique dans la requête Req1.

L'entité de gestion d'accès au service 11 génère ensuite un certificat Cert pour la clé publique du terminal 10, comme décrit ci-avant pour le deuxième mode de réalisation.

Lorsque l'utilisateur du terminal 10 souhaite regarder une chaîne particulière (un flux particulier), le terminal 10 émet la requête Req2 au DSLAM 13 pour obtenir le flux audio/vidéo.

La requête Req2 est signée par le terminal 10 lors l'étape S404 en utilisant la clé privée du terminal. Le certificat Cert est également envoyé dans la requête Req2.

Le DSLAM 13 vérifie alors:
- le certificat Cert et sa validité (étape S305),
- que la signature de la requête Req2 (la clé publique pour vérifier Sign2 est incluse dans Cert) est correcte (étape S206), et
- que l'adresse IP du flux @Flux.IP (ou bien l'identifiant du flux « Flux.ID ») est une des adresses IP (ou bien un des flux) autorisé(e)s dans le certificat.

L'entité de gestion d'accès au service 11 peut ajouter dans le certificat Cert soit un identifiant de la ligne téléphonique soit un numéro de port sur lequel la ligne téléphonique est raccordé au DSLAM. Cela permet en plus au DSLAM 13 de contrôler de façon "physique' la provenance de la requête Req2.

Ensuite le processus se poursuit avec les étapes S207 et S208 évoquées ci-avant pour le premier mode de réalisation.

Un programme d'ordinateur comportant des instructions pour la mise en oeuvre du procédé selon l'invention peut être réalisé par la personne du métier selon un algorithme général déduit des diagrammes des figures 2 à 4, et de la présente description détaillée.

La figure 5 illustre schématiquement la structure des éléments compris dans le système de la figure 1. Chaque dispositif (le terminal, l'entité de gestion de service ou l'entité d'accès) comporte une unité de traitement 50 configurée pour mettre en oeuvre les étapes correspondantes du procédé, par exemple en mettant en oeuvre un programme d'ordinateur selon un mode de réalisation de l'invention. Chaque dispositif comporte en outre une unité de mémoire 51 pour stocker des données de calcul ou pour le stockage d'un programme d'ordinateur selon la présente invention pour son exécution par un processeur de l'unité de traitement. Chaque dispositif comporte en outre une unité de communication 52 pour communiquer notamment avec les autres dispositifs du système ou avec les bases données 12 et 15 selon l'invention.

La présente invention ne se limite pas aux formes de réalisation présentées. D'autres variantes et modes de réalisation peuvent être déduits et mis en oeuvre par la personne du métier à la lecture de la présente description et des figures annexées.

## Revendications

1. Procédé d'accès à un flux de données de contenu par un terminal de télécommunications (10), ledit flux étant transmis à travers un réseau de communication (14) auquel est connectée une entité d'accès (13) chargée de la distribution finale du flux, comportant les étapes suivantes, mises en oeuvre par le terminal:
- envoi (S200) d'une première requête (Req1) à destination d'une entité de gestion d'accès à un service (11), cette première requête visant à identifier le terminal auprès de l'entité de gestion d'accès au service (11),
- après identification du terminal par l'entité de gestion d'accès au service (11), réception (S202, S303) de moyens d'authentification (K1, Cert) fournis par l'entité de gestion d'accès au service (11),
- envoi (S204, S304, S405) d'une deuxième requête (Req2) à destination de l'entité d'accès (13), cette deuxième requête visant l'accès par le terminal au flux de données de contenu, et cette deuxième requête étant générée en utilisant les moyens d'authentification fournis par l'entité de gestion d'accès au service (11), et
- réception en provenance de l'entité d'accès (13) d'un flux de données de contenu, suite à une authentification positive du terminal auprès de l'entité d'accès (13).

2. Procédé selon la revendication 1, comportant en outre une étape de détermination (S201) d'un ou plusieurs droits d'accès du terminal à un ou plusieurs flux de données par l'entité de gestion d'accès au service.

3. Procédé selon la revendication 1, dans lequel la première requête et/ou la deuxième requête comporte au moins l'un d'un identifiant du terminal et d'une adresse réseau du terminal.

4. Procédé selon la revendication 1, dans lequel les moyens d'authentification comportent une première clé cryptographique pour signer la deuxième requête.

5. Procédé selon la revendication 4, dans lequel l'entité d'accès authentifie la deuxième requête en vérifiant la signature de la deuxième requête au moyen de la première clé cryptographique.

6. Procédé selon l'une des revendications 4 et 5, dans lequel la première clé cryptographique est obtenue dynamiquement à partir d'au moins l'un d'un identifiant du terminal et d'une adresse réseau du terminal.

7. Procédé selon la revendication 1, dans lequel les moyens d'authentification comportent un certificat d'authentification autorisant l'accès par le terminal au flux de données.

8. Procédé selon la revendication 7, dans lequel le certificat comporte en outre une durée de validité du certificat.

9. Procédé selon la revendication 7 ou 8, dans lequel le certificat comporte au moins l'un d'un identifiant de ligne téléphonique et d'un numéro de port sur lequel la ligne téléphonique est raccordée à l'entité d'accès.

10. Procédé selon l'une des revendications 7 à 9, dans lequel la deuxième requête comporte le certificat.

11. Procédé selon l'une des revendications 7 à 10, dans lequel l'entité d'accès vérifie le certificat au moyen d'une deuxième clé d'autorité de certification.

12. Procédé selon l'une des revendications 7 à 11, dans lequel la deuxième requête est signée par le terminal au moyen d'une troisième clé cryptographique.

13. Procédé selon la revendication 12, dans lequel l'entité d'accès authentifie la deuxième requête en vérifiant la signature de la deuxième requête au moyen de la troisième clé cryptographique

14. Programme d'ordinateur comportant des instructions pour la mise en oeuvre d'un procédé selon l'une des revendications précédentes, lorsqu'il est exécuté par un processeur.

15. Terminal de télécommunications (10) configuré pour accéder à un flux de données de contenu, ledit flux étant transmis à travers un réseau de télécommunications (14) auquel est connectée une entité d'accès (13), chargée de la distribution finale du flux, comportant :
- une unité de communication (42) configurée pour envoyer une première requête (Req1) à destination d'une entité de gestion d'accès à un service (11), cette première requête visant à identifier le terminal auprès de l'entité de gestion d'accès au service (11), pour recevoir des moyens d'authentification (K1, Cert) fournis par l'entité de gestion d'accès au service (11) après identification du terminal par l'entité de gestion d'accès au service (11), pour envoyer une deuxième requête (Req2) à destination de l'entité d'accès (13), cette deuxième requête visant l'accès par le terminal au flux de données de contenu, et pour recevoir en provenance de l'entité d'accès (13) un flux de données de contenu, suite à une authentification positive du terminal auprès de l'entité d'accès (13), et
- une unité de traitement (40) configurée pour générer la deuxième requête en utilisant les moyens d'authentification fournis par l'entité de gestion d'accès au service (11).

16. Système de distribution de flux de données de contenus à travers un réseau télécommunications (14), comportant:
- un terminal (10) de télécommunications selon la revendication 15,
- une entité de gestion d'accès à un service (11), configurée pour recevoir une première requête (Req1) envoyée par le terminal, cette première requête visant à identifier le terminal auprès de l'entité de gestion d'accès au service (11), pour envoyer des moyens d'authentification (K1, Cert) après identification du terminal, et
- une entité d'accès (13) chargée de la distribution finale du flux au terminal, configurée pour recevoir une deuxième requête (Req2) envoyée par le terminal, la deuxième requête visant l'accès par le terminal au flux de données de contenu, pour authentifier le terminal en fonction de la deuxième requête, générée par le terminal en utilisant lesdits moyens d'authentification, et pour transmettre le flux de données requis une fois le terminal authentifié.

## Patentansprüche

1. Zugriffsverfahren auf einen Fluss von Inhaltsdaten durch ein Telekommunikationsendgerät (10), wobei der Fluss durch ein Kommunikationsnetz (14) übertragen wird, an das eine Zugriffseinheit (13) angeschlossen wird, die mit der endgültigen Verteilung des Flusses beauftragt wird, umfassend die folgenden Schritte, die durch das Endgerät umgesetzt werden:
- Senden (S200) einer ersten Anfrage (Req1) an eine Zugriffsverwaltungseinheit auf einen Service (11), wobei diese erste Anfrage darauf abzielt, das Endgerät bei der Zugriffsverwaltungseinheit auf den Service (11) zu identifizieren,
- nach dem Identifizieren des Endgeräts durch die Zugriffsverwaltungseinheit auf den Service (11) Empfangen (S202, S303) von Authentifizierungsmitteln (K1, Cert), die von der Zugriffsverwaltungseinheit auf den Service (11) bereitgestellt werden,
- Senden (S204, S304, S405) einer zweiten Anfrage (Req2) an die Zugriffseinheit (13), wobei diese zweite Anfrage auf den Zugriff durch das Endgerät auf den Fluss von Inhaltsdaten abzielt, und wobei diese zweite Anfrage erzeugt wird, indem die Authentifizierungsmittel verwendet werden, die von der Zugriffsverwaltungseinheit auf den Service (11) bereitgestellt werden, und
- Empfangen von der Zugriffseinheit (13) eines Flusses von Inhaltsdaten nach einer positiven Authentifizierung des Endgeräts bei der Zugriffseinheit (13).

2. Verfahren nach Anspruch 1, ferner umfassend einen Schritt des Bestimmens (S201) von einem oder mehreren Zugriffsrechten des Endgeräts auf einen oder mehrere Datenflüsse durch die Zugriffsverwaltungseinheit auf den Service.

3. Verfahren nach Anspruch 1, wobei die erste Anfrage und/oder die zweite Anfrage mindestens eine von einer Kennung des Endgeräts und einer Netzwerkadresse des Endgeräts aufweist.

4. Verfahren nach Anspruch 1, wobei die Authentifizierungsmittel einen ersten kryptographischen Schlüssel aufweisen, um die zweite Anfrage zu signieren.

5. Verfahren nach Anspruch 4, wobei die Zugriffseinheit die zweite Anfrage authentifiziert, indem die Signatur der zweiten Anfrage mit Hilfe des ersten kryptographischen Schlüssels verifiziert wird.

6. Verfahren nach einem der Ansprüche 4 und 5, wobei der erste kryptographische Schlüssel ausgehend von mindestens einer von einer Kennung des Endgeräts und einer Netzwerkadresse des Endgeräts dynamisch erhalten wird.

7. Verfahren nach Anspruch 1, wobei die Authentifizierungsmittel ein Authentifizierungszertifikat aufweisen, das den Zugriff durch das Endgerät auf den Datenfluss autorisiert.

8. Verfahren nach Anspruch 7, wobei das Zertifikat ferner eine Gültigkeitsdauer des Zertifikats aufweist.

9. Verfahren nach Anspruch 7 oder 8, wobei das Zertifikat mindestens eine von einer Kennung einer Telefonleitung und einer Nummer eines Ports, an dem die Telefonleitung an die Zugriffseinheit angeschlossen ist, aufweist.

10. Verfahren nach einem der Ansprüche 7 bis 9, wobei die zweite Anfrage das Zertifikat aufweist.

11. Verfahren nach einem der Ansprüche 7 bis 10, wobei die Zugriffseinheit das Zertifikat mit Hilfe eines zweiten Schlüssels einer Zertifizierungsstelle verifiziert.

12. Verfahren nach einem der Ansprüche 7 bis 11, wobei die zweite Anfrage durch das Endgerät mit Hilfe eines dritten kryptographischen Schlüssels signiert wird.

13. Verfahren nach Anspruch 12, wobei die Zugriffseinheit die zweite Anfrage authentifiziert, indem die Signatur der zweiten Anfrage mit Hilfe des dritten kryptographischen Schlüssels verifiziert wird.

14. Computerprogramm, das Anweisungen zum Umsetzen eines Verfahrens nach einem der vorhergehenden Ansprüche aufweist, wenn es von einem Prozessor ausgeführt wird.

15. Telekommunikationsendgerät (10), das konfiguriert ist, um auf einen Fluss von Inhaltsdaten zuzugreifen, wobei der Fluss durch ein Telekommunikationsnetz (14) übertragen wird, an das eine Zugriffseinheit (13) angeschlossen ist, die mit der endgültigen Verteilung des Flusses beauftragt ist, umfassend:
- eine Kommunikationseinheit (42), die konfiguriert ist, um eine erste Anfrage (Req1) an eine Zugriffsverwaltungseinheit auf einen Service (11) zu senden, wobei diese erste Anfrage darauf abzielt, das Endgerät bei der Zugriffsverwaltungseinheit auf den Service (11) zu identifizieren, um nach dem Identifizieren des Endgeräts durch die Zugriffsverwaltungseinheit auf den Service (11) Authentifizierungsmittel (K1, Cert), die von der Zugriffsverwaltungseinheit auf den Service (11) bereitgestellt sind, zu empfangen, um eine zweite Anfrage (Req2) an die Zugriffseinheit (13) zu senden, wobei diese zweite Anfrage auf den Zugriff durch das Endgerät auf den Fluss von Inhaltsdaten abzielt, und um von der Zugriffseinheit (13) einen Fluss von Inhaltsdaten nach einer positiven Authentifizierung des Endgeräts bei der Zugriffseinheit (13) zu empfangen, und
- eine Verarbeitungseinheit (40), die konfiguriert ist, um die zweite Anfrage durch Verwenden der Authentifizierungsmittel, die von der Zugriffsverwaltungseinheit auf den Service (11) bereitgestellt sind, zu generieren.

16. System zur Verteilung eines Flusses von Inhaltsdaten über ein Telekommunikationsnetz (14), umfassend:
- ein Telekommunikationsendgerät (10) nach Anspruch 15,
- eine Zugriffsverwaltungseinheit auf einen Service (11), die konfiguriert ist, um eine erste Anfrage (Req1) zu empfangen, die von dem Endgerät gesendet ist, wobei diese erste Anfrage darauf abzielt, das Endgerät bei der Zugriffsverwaltungseinheit auf den Service (11) zu identifizieren, um nach dem Identifizieren des Endgeräts Authentifizierungsmittel (K1, Cert) zu senden, und
- eine Zugriffseinheit (13), die mit der endgültigen Verteilung des Flusses an das Endgerät beauftragt ist, die konfiguriert ist, um eine zweite Anfrage (Req2), die von dem Endgerät gesendet ist, zu empfangen, wobei die zweite Anfrage auf den Zugriff durch das Endgerät auf den Fluss von Inhaltsdaten abzielt, um das Endgerät in Abhängigkeit von der zweiten Anfrage zu authentifizieren, die von dem Endgerät durch Verwenden der Authentifizierungsmittel generiert ist, und um den angefragten Datenfluss zu übertragen, sobald das Endgerät authentifiziert ist.

## Claims

1. Method for access to a content data stream by a telecommunications terminal (10), said stream being transmitted through a communication network (14) to which is connected an access entity (13) responsible for the final distributing of the stream, comprising the following steps, implemented by the terminal:
- dispatching (S200) of a first request (Req1) to an entity for managing access to a service (11), this first request being aimed at identifying the terminal to the entity for managing access to the service (11),
- after identification of the terminal by the entity for managing access to the service (11), reception (S202, S303) of authentication means (K1, Cert) provided by the entity for managing access to the service (11),
- dispatching (S204, S304, S405) of a second request (Req2) to the access entity (13), this second request being aimed at access by the terminal to the content data stream, and this second request being generated by using the authentication means provided by the entity for managing access to the service (11), and
- reception from the access entity (13) of a content data stream, subsequent to a positive authentication of the terminal to the access entity (13).

2. Method according to Claim 1, furthermore comprising a step (S201) of determining one or more rights of access of the terminal to one or more data streams by the entity for managing access to the service.

3. Method according to Claim 1, in which the first request and/or the second request comprises at least one of an identifier of the terminal and of a network address of the terminal.

4. Method according to Claim 1, in which the authentication means comprise a first cryptographic key for signing the second request.

5. Method according to Claim 4, in which the access entity authenticates the second request by verifying the signature of the second request by means of the first cryptographic key.

6. Method according to one of Claims 4 and 5, in which the first cryptographic key is obtained dynamically on the basis of at least one of an identifier of the terminal and of a network address of the terminal.

7. Method according to Claim 1, in which the authentication means comprise an authentication certificate authorizing access by the terminal to the data stream.

8. Method according to Claim 7, in which the certificate furthermore comprises a duration of validity of the certificate.

9. Method according to Claim 7 or 8, in which the certificate comprises at least one of a telephone line identifier and of a port number for a port on which the telephone line is linked to the access entity.

10. Method according to one of Claims 7 to 9, in which the second request comprises the certificate.

11. Method according to one of Claims 7 to 10, in which the access entity verifies the certificate by means of a second certification authority key.

12. Method according to one of Claims 7 to 11, in which the second request is signed by the terminal by means of a third cryptographic key.

13. Method according to Claim 12, in which the access entity authenticates the second request by verifying the signature of the second request by means of the third cryptographic key

14. Computer program comprising instructions for the implementation of a method according to one of the preceding claims, when it is executed by a processor.

15. Telecommunications terminal (10) configured to access a content data stream, said stream being transmitted through a telecommunications network (14) to which is connected an access entity (13), responsible for the final distributing of the stream, comprising:
- a communication unit (42) configured to dispatch a first request (Req1) to an entity for managing access to a service (11), this first request being aimed at identifying the terminal to the entity for managing access to the service (11), to receive authentication means (K1, Cert) provided by the entity for managing access to the service (11) after identification of the terminal by the entity for managing access to the service (11), to dispatch a second request (Req2) to the access entity (13), this second request being aimed at access by the terminal to the content data stream, and to receive from the access entity (13) a content data stream, subsequent to a positive authentication of the terminal to the access entity (13), and
- a processing unit (40) configured to generate the second request by using the authentication means provided by the entity for managing access to the service (11).

16. System for distributing content data streams through a telecommunications network (14), comprising:
- a telecommunications terminal (10) according to Claim 15,
- an entity for managing access to a service (11), configured to receive a first request (Req1) dispatched by the terminal, this first request being aimed at identifying the terminal to the entity for managing access to the service (11), to dispatch authentication means (K1, Cert) after identification of the terminal, and
- an access entity (13) responsible for the final distributing of the stream to the terminal, configured to receive a second request (Req2) dispatched by the terminal, the second request being aimed at access by the terminal to the content data stream, to authenticate the terminal as a function of the second request, generated by the terminal by using said authentication means, and to transmit the data stream requested once the terminal has been authenticated.
